# EUROPEAN PATENT APPLICATION

(11) **EP 4 795 924 A1**
(43) Date of publication of application: **26.08.2026**
(21) Application number: 25159481.8
(22) Date of filing: 21.02.2025
(51) Int. Cl.: A01D 89/00

(54) **AGRICULTURAL IMPLEMENT INCLUDING LIFT ACTUATOR FOR CROP PICK-UP ASSEMBLY**

(71) Applicant: CNH Industrial Belgium N.V., 8210 Zedelgem (BE)
(72) Inventor: Monbaliu, Sven, 8210 Zedelgem (BE)
(74) Representative: CNH Industrial IP Department

(57) **Abstract**

In an agricultural implement, a pick-up assembly (1) is coupled to the frame (3) of the implement though at least one hydraulic actuator (15). The actuator comprises a cylinder (20), a first piston (23) and a rod (24) attached to the first piston. The cylinder (20) and the rod (24) are pivotably connected to the pick-up assembly (1) and to the frame (3) or vice versa, so that the actuator enables pivoting at least part of the pick-up assembly about a horizontal pivot axis (6), thereby lifting or lowering the assembly relative to a ground level (2). The cylinder (20) comprises an inlet port (27) positioned so that lifting the pick-up is enabled through the supply of hydraulic fluid to the inlet port. According to the invention, a second piston (25) is arranged in the cylinder, between the inlet port (27) and the first cylinder (23), and the rod (24) comprises an internal channel (24) that provides access to an interior space (33) of the cylinder, situated between the two pistons. This configuration enables setting a fixed stop position by supplying a given volume of hydraulic fluid between the pistons (23,25) or between the second piston (25) and the inlet port (27) of the cylinder, and maintaining said volume in the thus created space.

## Description

### Field of the Invention

The present invention is related to the height regulation of the crop pick-up assembly of an agricultural implement, for example a baler or a forage harvester.

### State of the art.

Agricultural balers and other implements configured to collect crops like grass or hay are equipped with a pick-up assembly, hereafter also referred to more briefly as a 'pick-up'. Hay or grass is usually cut from the field by a forage harvester and deposited on the ground in linear swathes. When the crop has dried, it may be collected by the same or another harvester for further processing or storage, or by a baler for directly compacting the crop in the form of rectangular or round bales. The baler may be a self-propelled baler or a baler drawn by a tractor.

The pick-up assembly provided on a baler or harvester comprises rotatable tines for picking up the previously deposited crop. The assembly may further comprise one or more augers for gathering the crop and moving it onward to further processing tools, for example to a stuffer mechanism configured to feed the crops to the baling chamber of a rectangular baler.

Usually the pick-up assembly comprises a set of wheels which enable the pick-up to be supported on the ground while moving forward. However, sometimes it is necessary to lift the assembly up from the ground level. When making a turn or while driving on headland, it is beneficial to be able to lift the assembly up to a considerable distance above ground level to avoid entangling the pick-up tines with weeds or to avoid interference with bumps or rocks.

To enable lifting up the pick-up assembly, it is known to provide one or more hydraulic actuators between the pick-up assembly and the frame of the baler or harvester. This hydraulic system is not only used to fully lift up the pick-up but also to dynamically adjust position of the pick-up during the pick-up operation.

However, in certain conditions it is preferable to maintain the pick-up assembly above ground level and at a fixed stop position relative to the frame of the baler or harvester, such that the pick-up assembly cannot be lowered beyond the stop position. When the stubble is quite long for example, it is better to operate at a fixed stop position and use the wheels as a back-up protection when there is a bump.

Today, systems are known which enable the operator to set a fixed stop mechanically, for example by adjusting the position of a stopper relative to a movable part of the actuator. Such solutions however require the operator to manually set the fixed stop position, which is usually a time-consuming effort, especially if the adjustment mechanism is in a location that is difficult to access.

### Summary of the invention

The invention is related to an agricultural implement, which may for example be a baler or a forage harvester, equipped with a crop pick-up assembly in accordance with the appended claims.

The pick-up assembly is coupled to the frame of the implement though at least one hydraulic actuator. The actuator comprises a cylinder, a first piston and a rod attached to the first piston. The cylinder and the rod are pivotably connected to the pick-up assembly and to the frame or vice versa, so that the actuator enables pivoting at least part of the pick-up assembly about a horizontal pivot axis, thereby lifting or lowering the assembly relative to a ground level. The cylinder comprises an inlet port positioned so that lifting up the pick-up is enabled through the supply of hydraulic fluid to the inlet port. According to the invention, a second piston is arranged in the cylinder, between the inlet port of the cylinder and the first piston, and the rod comprises an internal channel that provides access to the interior space of the cylinder situated between the two pistons. This configuration enables setting a fixed stop position by supplying a given volume of hydraulic fluid between the pistons or between the second piston and the inlet port of the cylinder, and maintaining said volume in the thus created space. When the fixed stop is set in this way, lifting the pick-up assembly remains possible via the inlet port of the cylinder or via the internal channel of the rod, but lowering the pick-up is stopped at the fixed stop position. The invention thereby enables setting the fixed stop at a desired height without interrupting the implement's operation.

Besides the setting of a fixed stop position, the invention enables other use cases for a pick-up assembly equipped with the above-described actuator or actuators. According to another use case, either the inlet port of the cylinder or the internal channel through the rod can be coupled to a constant pressure applied for partially compensating the weight of the pick-up assembly.

### Brief description of the figures

Figures 1a and 1b illustrate a fully down and fully lifted position of a pick-up assembly in accordance with an embodiment of the invention.
Figures 2a and 2b show more detailed views of the actuator when the pick-up assembly is in the fully down and fully lifted positions
Figure 3 shows an enlarged detail of the image shown in Figure 2b.
Figures 4 and 5 illustrate positions of the actuator when a fixed stop position has been set hydraulically via the internal channel of the rod.
Figure 6 illustrate the actuator when the pick-up assembly is in a lifted position, without a fixed stop being activated via the internal channel of the rod.

### Detailed description of embodiments of the invention

Embodiments will now be described with reference to the drawings. The detailed description is not limiting the scope of the invention, which is defined only by the appended claims.

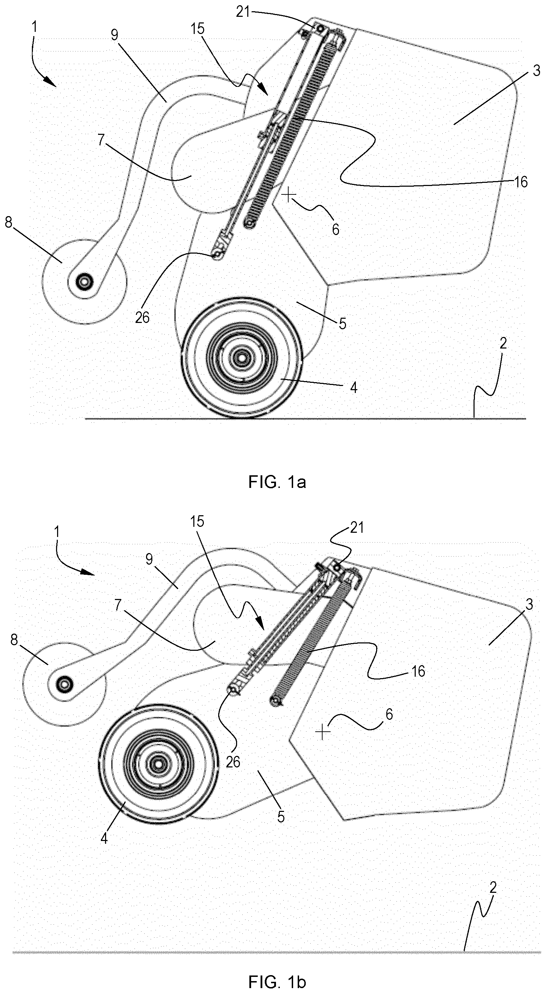

Reference is first made to Figures 1a and 1b, which show respectively a 'fully down' and 'fully up' position of a pick-up assembly 1 according to an embodiment of the invention. The down and up positions are illustrated relative to a ground level 2. The pick-up assembly 1 is coupled to the frame 3 of an agricultural implement which may for example be a baler or a forage harvester. The frame may be fixed to the chassis of the baler or harvester for example.

The pick-up 1 includes a pair of wheels 4, one of which is visible in the side views shown in Figures 1a and 1b. The pick-up assembly 1 further comprises a rotatable pick-up reel extending between the wheels. The reel is mounted in a reel housing 5 that is pivotable relative to the frame 3 about a pivot axis 6. An auger for gathering crops towards a central area of the pick-up is mounted in an auger housing 7 situated above the reel. A windguard 8 roll is rotatably attached to a pair of support arms 9.

The reel housing 5 is coupled to the frame 3 through at least one hydraulic actuator 15 configured to enable lifting up the reel housing 5 and thereby the pick-up assembly to a desired height, by pivoting the reel housing 5 about its pivot axis 6. The actuator 15 is shown in cross-section view. A mechanical weight compensating spring 16 is also mounted between the frame 3 and the reel housing 5. In the particular embodiment shown, lifting up or lowering the pick-up assembly 1 is actuated by a pair of identical actuator-spring combinations, one on each side of the pick-up, and coupled to the same hydraulic circuits. The invention is however applicable also to embodiments wherein the lifting action is actuated by a single actuator.

Further in the particular configuration illustrated in the drawings, the auger housing 7 and the windguard support arms 9 are pivotable relative to the frame 3 about pivot axes which are separate from the pivot axis 6 of the reel housing 5, and these components are pivoted up or down together with the up or down movement of the reel housing 5 through internal transmission mechanisms. The invention is however not limited to this particular configuration in terms of how the various components of the assembly are lifted or lowered. The invention is applicable also to a pick-up assembly configured to be pivoted up or down about a single pivot axis for example.

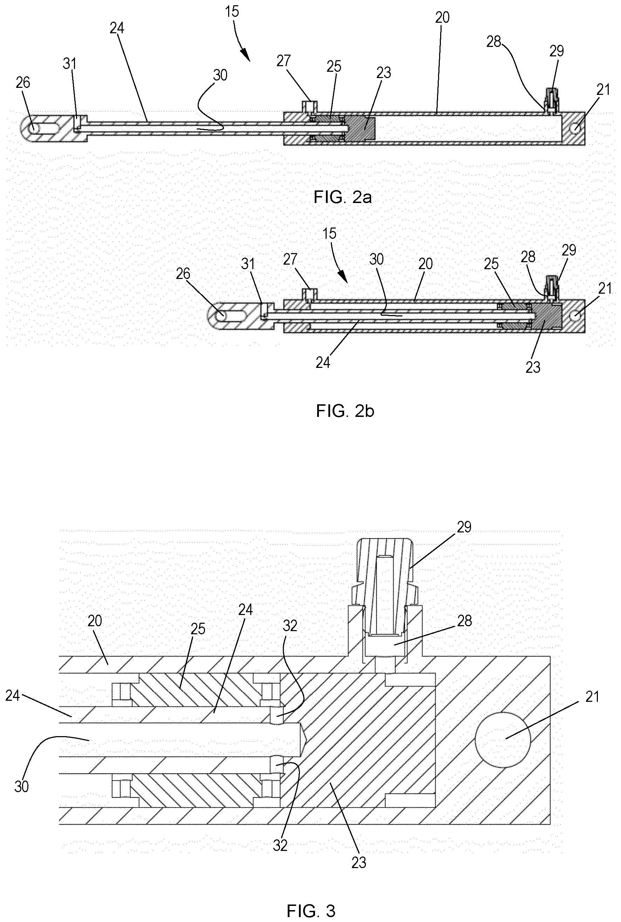

The illustrated embodiment is characterized by specific features of the actuators 15 as such. Reference is therefore made to Figures 2 to 6 which show more detailed images of one actuator 15 in cross-section view. Figures 2a and 2b show the actuator 15 in the respective positions corresponding to the down and up situations shown in Figures 1a and 1b. The hydraulic actuator 15 is a variable length actuator comprising a cylinder 20 that is pivotably attached to the frame 3 in a first pivot point 21. Inside the cylinder 20 and movable linearly with respect to the cylinder is a first piston 23 attached to a rod 24 and a second piston 25 arranged around the rod 24. The second piston 25 adds a functionality to the actuator while maintaining the normal lifting capability of the actuator. Before describing the added functionality however, further elements contributing to the standard lifting operation will be further described.

The rod 24 extends out of the cylinder 20 and is pivotably attached to the reel housing 5 in a second pivot point 26. Hydraulic seals (not shown) are provided between each of the pistons 23 and 25 and the interior wall of the cylinder 20, and between the rod 24 and the opening in the cylinder 20 through which the rod extends. A further seal (not shown) is provided between the rod 24 and the second piston 25. The cylinder 20 comprises an inlet port 27 for supplying hydraulic fluid to the interior of the cylinder on the 'rod side' of the first piston 23. This configuration thereby enables pressurizing the cylinder 20 between the inlet port 27 and the pistons 23 and 25, to thereby lift up the pick-up assembly 1 by pivoting the reel housing 5 upward, to the fully lifted position illustrated in Figure 2b or to any intermediate operational height. On the opposite side of the first piston 23, the cylinder comprises an outlet port 28. In the illustrated embodiment, this outlet port 28 is connected to a breather valve 29, i.e. the actuator 15 is one-side acting actuator. The invention does however not exclude embodiments wherein the opposite side of the first piston 23 is also coupled to a hydraulic circuit.

The weight-compensating spring 16 is a tension spring having a spring constant configured to partially compensate the weight of the pick-up assembly. In other words, when the hydraulic pressure on the rod side of the first piston 23 drops below a given value, the pick-up assembly pivots downward under the influence of its own weight, but this weight is partially compensated by the extension of the spring 16. Reducing the hydraulic pressure can for example be done by opening a valve in a hydraulic circuit comprising a pump coupled to the inlet port 27, so that the valve connects the inlet port 27 to the low-pressure side of the pump, allowing thereby the hydraulic fluid to flow out of the cylinder 20. Valve configurations for enabling these actions are well known in the art and need not be described here in detail. The standard hydraulic circuit of a tractor configured to tow a baler provided with the pick-up assembly 1 may for example be used for this purpose.

Turning now to the functionality of the second piston 25, this second piston is movable relative to the cylinder 20 and relative to the rod 24 and located between the inlet port 27 and the first piston 23. In addition, the rod 24 comprises an internal channel 30 provided with an inlet port 31 that is to be coupled to a hydraulic supply line (not shown). The internal channel 30 of the rod is connected to the interior space of the cylinder situated between the first and second pistons 23 and 25. Said interior space is variable as a function of the distance between the two pistons. As shown in the enlarged detail view in Figure 3, access to said interior space of the cylinder is enabled by lateral holes 32 through the rod 24, in the vicinity of its attachment to the first piston 23.

Hydraulic fluid can thus be supplied through the rod 24 to thereby separate the pistons from each other. This capability enables a number of advantageous use cases, depending on the hydraulic circuit to which the internal channel 30 of the rod 24 is connected.

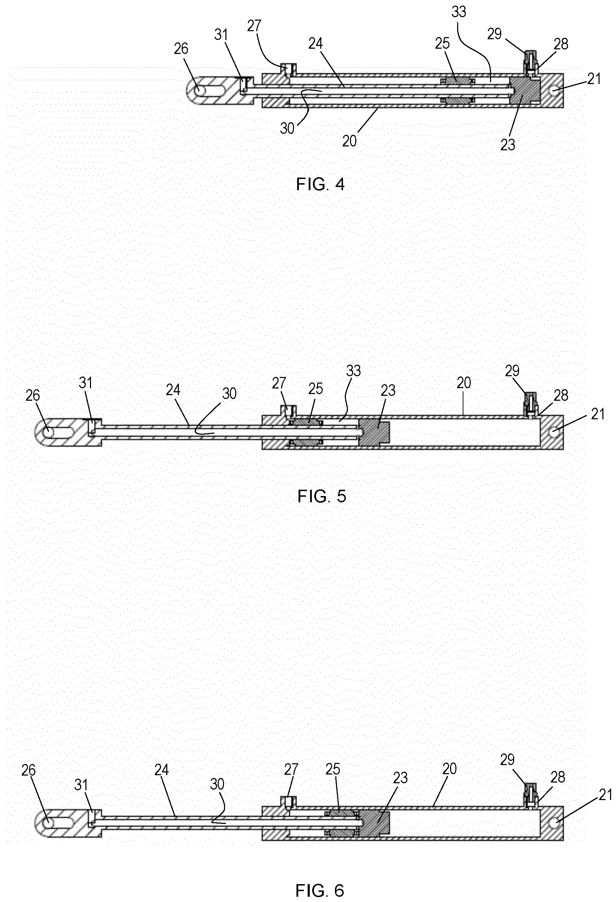

In a first use case, the inlet port 31 to the internal channel 30 is connected to a hydraulic circuit that enables supplying a specific volume of hydraulic fluid, i.e. of a non-compressible fluid such as hydraulic oil, to the space between the two pistons 23,25 and maintaining said volume in said space regardless of the position of the pick-up assembly as a whole. Starting for example from the fully lifted position illustrated by Figures 1b and 2b, the supply of a well-defined volume of hydraulic fluid through the internal channel 30 of the rod forces the second piston 25 to move away from the first piston 23, as illustrated in Figure 4, thereby enlarging the internal space 33 between the pistons. The hydraulic circuit coupled to the internal channel 30 comprises a stopper valve configured to obstruct hydraulic fluid from flowing out of the thus created space 33. In other words, when this valve is closed, the distance between the two pistons is locked and defines a fixed stopping position when the pick-up is fully lowered. This is illustrated in Figure 5 : with the second piston 25 in the locked position, the pick-up cannot be lowered beyond the height defined by the distance between the two pistons 23,25.

The second piston 25 combined with the internal channel 30 through the rod 24 thereby enables the creation of a fixed stop by hydraulic force in stead of by a mechanical means. As stated, this functionality requires a specific hydraulic circuit that enables controlling the supply of fluid through the internal channel 30 independently of the supply of fluid to the inlet port 27 of the cylinder 20. Various ways of providing such independent hydraulic controls can be realized, which may depend on the type of agricultural implement to which the pick-up assembly 1 is mounted. One exemplary configuration comprises a tractor towing a baler provided with the pick-up as described above, wherein the tractor may be any known tractor type that includes a hydraulic circuit comprising a pump and a valve system configured to supply hydraulic oil to an implement towed by the tractor. The tractor's supply circuit is connected to the inlet port 27 for supplying oil to the cylinder 20 at a pressure sufficient for lifting up the pick-up 1. The baler comprises a separate hydraulic circuit and valve system for regulating the flow of oil to and from the internal channel 30 through the rod 24 and for thereby locking and unlocking a fixed stop position of the second piston 25. The separate circuit may use oil from the same tank as the tractor's supply circuit but it is controlled separately from the tractor circuit.

The valves needed to control the flow of oil to the inlet port 27 and through the internal channel 30 may be any kind of known valve types applicable for the described functionalities. Manually operated valves can be used or electrohydraulic valves operable remotely through control signals. When all the valve systems are electrohydraulic, a harvester according to the invention or a tractor+baler configuration according to the invention may include a control unit and user interface coupled to the hydraulic circuits and to the actuator or actuators 15 via a number of sensors, for example sensors for determining the positions of the pistons 23,25. The user interface enables controlling the pick-up height by the normal actuator lifting action through the oil pressure at the inlet port 27. A separate control, for example a rotatable knob or any digital equivalent on a touch screen, enables the setting of a fixed stop height, i.e. of a locked distance between the two pistons 23,25, through the control of the oil supply to the internal channel 30. When electrohydraulic valves are used, the control unit may be configured to implement a degree of automation, for example by automatically adjusting a fixed stop position depending on the detection, through a suitable sensor configuration for example including one or more cameras or position sensors, of bumps or depressions in the terrain.

The fixed stop is deactivated by allowing the hydraulic fluid to flow out of the space 33 between the pistons, which can be done by opening the stopper valve referred to above, in the hydraulic circuit to which the internal channel 30 through the rod is coupled. In this condition, no fixed stop position above ground level is set, and the normal lifting or lowering action remains possible through the control of the oil supply to the inlet port 27, as illustrated in Figure 6 : the hydraulic pressure at the inlet port 27 is controlled to lift up the pick-up by pushing both pistons 23,25 upward to the position as illustrated. This is however not a fixed stop in the sense described above : the pressure and the pick-up height can be adapted dynamically during the pick-up's operation, for example for maintaining an optical contact between the wheels and the ground.

In the above-described embodiment, the circuit coupled to the internal channel 30 of the rod 24 is also capable of lifting up the pick-up assembly. When the pick-up is in the fully down position for example, with no fixed stop position defined, as shown in Figures 1a and 2a, setting a fixed stop position requires lifting up the pick-up by supplying oil to the internal channel 30 at sufficient pressure so that the first piston 23 is forced upward and away from the second piston 25. Setting the fixed stop position can for example be done by lifting the pick-up in this way to a position above the desired fixed stop, and then letting the pick-up go down under its own weight (by lowering the lifting pressure coupled to the internal channel 30), and by closing the stopper valve included in the circuit coupled to the internal channel 30 when the desired fixed stop position is reached.

So both circuits, the one coupled to the inlet port 27 of the cylinder 20 and the one coupled to the internal channel 30 of the rod 24 are able to lift the pick-up. The difference is that the circuit coupled to the internal channel 30 comprises a stopper valve configured to maintain a predefined volume of oil in the space between the pistons.

In this respect it is to be noted that the same use case, i.e. enabling a fixed stop position hydraulically, can also be achieved by switching the hydraulic circuits to which the inlet port 27 to the cylinder 20 and the inlet port 31 to the internal channel 30 are coupled. The pick-up can then be lifted by supplying oil at a sufficiently high pressure via the internal channel 30 through the rod 24, while setting the fixed stop position is done by supplying a given volume of oil to the inlet port 27 to set the second piston 25 at a pre-defined distance from said inlet port 27 of the cylinder 20, so that said distance defines the fixed stop position beyond which the pick-up cannot be lowered. In the latter case, the circuit coupled to the inlet port 27 of the cylinder comprises the stopper valve that enables locking the fixed stop position..

According to another use case, one of the inlet ports 27,31 is coupled to a hydraulic circuit configured to compensate part of the weight of the pick-up while the other inlet port is coupled to a circuit configured to lift up the pick-up. The mechanical spring is then omitted and the weight-compensation is realized hydraulically, by connecting one inlet port to a circuit configured to maintain a constant pressure at said inlet port, wherein the constant pressure is insufficient to lift the pick-up but sufficient to compensate a given fraction of the pick-up weight. The pressure can be kept constant by an appropriate valve system and/or by an accumulator.

The invention is not limited to the exact configuration illustrated in the drawings. For example, the actuator could be reversed, with the cylinder 20 pivotably connected to the pick-up assembly 1 and the rod 24 pivotably connected to the frame 3. In that case, the cylinder 20 would move relative to the rod but the operation and functionality of the second piston 25 and the internal channel 30 are the same.

The invention is related to any agricultural implement comprising a pick-up assembly and one or more actuators which enable the above-described functionalities. Which functionality is implemented, e.g. setting a fixed stop position or compensating the pick-up weight, depends on the hydraulic circuits to which the inlet ports 27 and 31 are coupled. The invention is related to self-driven implements such as forage harvesters and to combinations of a driven implement such as a baler and a towing vehicle such as a tractor. Both a self-driven implement and a vehicle+implement combination according to the invention is equipped with suitable hydraulic circuits for implementing a desired functionality and with a control unit and user interface for setting and controlling the functionality, for example for setting a fixed stop position or a weight-compensating pressure.

## Claims

1. An agricultural implement comprising a frame (3) and a crop pick-up assembly (1) for picking up crops from a field as the implement moves forward in the field, wherein:
- at least part (5) of the crop pick-up assembly (1) is pivotable relative to the frame about a horizontal pivot axis (6) to thereby lift or lower the pick-up assembly (1),
- the lifting or lowering of the pick-up assembly (1) is controllable by at least one hydraulic actuator (15) coupled between a first and second pivot point (21,26) situated respectively on said part (5) of the pick-up assembly (1) and on the frame (3) or vice versa,
- the actuator (15) comprises a cylinder (20) pivotably coupled to the first pivot point (21), a first piston (23) configured to move linearly inside and relative to the cylinder and a rod (24) attached to the first piston and pivotably coupled to the second pivot point (26),
- the cylinder comprises an inlet port (27) located such that lifting up the pick-up assembly is enabled by supplying hydraulic fluid through the inlet port (27) at a sufficient pressure,
**characterized in that** :
- the actuator (15) comprises a second piston (25) arranged in the cylinder (20) between the inlet port (27) and the first piston (23), the second piston being movable relative to the cylinder (20) and relative to the first piston (23),
- the rod (24) comprises an internal channel (30) that enables the supply of hydraulic fluid to an internal space (33) of the cylinder situated between the first (23) piston and the second piston (25).

2. The agricultural implement according to claim 1, wherein the inlet port (27) of the cylinder (20) is coupled to a first hydraulic circuit configured to enable lifting the pick-up assembly and wherein the internal channel (30) of the rod is coupled to a second hydraulic circuit configured to enable setting the second piston (25) at a given distance from the first piston (23) and maintaining said distance, so that the assembly cannot be lowered beyond a stop position determined by said distance.

3. The agricultural implement according to claim 1, wherein the internal channel (30) of the rod (24) is coupled to a first hydraulic circuit configured to enable lifting the pick-up assembly and wherein the inlet port (27) of the cylinder (20) is coupled to a second hydraulic circuit configured to enable setting the second piston (25) at a given distance from said inlet port (27) and maintaining said distance, so that the assembly cannot be lowered beyond a stop position determined by said distance.

4. The agricultural implement according to any one of the preceding claims, further comprising at least one elastic element (16) arranged between the frame (3) and the pick-up assembly (1), and configured to compensate part of the weight of the pick-up assembly.

5. The agricultural implement according to claim 4, wherein said elastic element is a mechanical spring (16).

6. The agricultural implement according to any one of the preceding claims, wherein the internal channel (30) through the rod (24) is coupled to a hydraulic circuit configured to enable lifting the pick-up assembly (1).

7. The agricultural implement according to claim 1, wherein the inlet port (27) of the cylinder (20) is coupled to a first hydraulic circuit configured to enable lifting the pick-up assembly, and wherein the internal channel (30) of the rod is coupled to a second hydraulic circuit configured to enable maintaining a constant pressure in said internal area (33) of the cylinder situated between the first and the second piston (23,25), so that said constant pressure enables compensating a fraction of the weight of the pick-up assembly (1).

8. The agricultural implement according to claim 1, wherein the internal channel of the rod (24) is coupled to a first hydraulic circuit configured to enable lifting the pick-up assembly, and wherein the inlet port (27) of the cylinder (20) is coupled to a second hydraulic circuit configured to enable maintaining a constant pressure in the cylinder, so that said constant pressure enables compensating a fraction of the weight of the pick-up assembly.

9. The agricultural implement according to any one of the preceding claims, comprising a pair of said actuators (15), arranged on either side of the pick-up assembly (1) and configured to perform the same actuation simultaneously.

10. A self-driven agricultural implement according to any one of the preceding claims, comprising a first hydraulic circuit coupled to the inlet port (27) of the cylinder (20) and a second hydraulic circuit coupled to the internal channel (30) through the rod (24).
